# FASCICULE DE BREVET EUROPEEN

(11) **EP 3 763 023 B1**
(45) Date de publication et mention de la délivrance du brevet: **12.06.2024**
(21) Numéro de dépôt: 19706697.0
(22) Date de dépôt: 27.02.2019
(51) Int. Cl.: H02K 9/02, H02K 9/04, H02K 9/06, F02B 39/10, H02K 9/14, H02K 5/18, H02K 5/20, H02K 9/19, H02K 1/20, H02K 7/14

(54) **MACHINE ELECTRIQUE A DOUBLE FLUX**
ELEKTRISCHE ZWEISTROMMASCHINE
DUAL-FLUX ELECTRIC MACHINE

(30) Priorité: 08.03.2018 FR 1852012
(43) Date de publication de la demande: 13.01.2021
(73) Titulaire: IFP Energies nouvelles, 92852 Rueil-Malmaison (FR)
(72) Inventeur: MILOSAVLJEVIC, Misa, 92852 RUEIL-MALMAISON CEDEX (FR); LE BERR, Fabrice, 92852 RUEIL-MALMAISON CEDEX (FR)
(74) Mandataire: IFP Energies nouvelles
(86) Numéro de dépôt international: PCT/EP2019/054849
(87) Numéro de publication internationale: WO 2019/170490

(56) Documents cités:
- EP-A1- 3 242 002
- EP-A2- 0 917 279
- WO-A1-2015/023444
- WO-A2-2010/018334
- CN-A- 105 186 785
- CN-A- 107 237 684
- DE-A1-102012 221 298
- DE-B4-102014 215 560
- FR-A- 1 349 625
- FR-A1- 3 041 831
- FR-A1- 3 048 022
- FR-A1- 3 073 579
- JP-U- S57 133 279
- US-A- 5 904 471
- US-A1- 2007 228 847
- US-A1- 2007 269 323
- US-A1- 2008 265 699
- US-A1- 2012 128 512
- US-A1- 2013 239 568
- US-A1- 2016 233 743

## Description

La présente invention se rapporte à une machine électrique pour un dispositif de compression à assistance électrique d'un fluide de travail, tel qu'un fluide liquide ou un fluide gazeux.

Elle concerne notamment un dispositif pour comprimer un fluide gazeux, ici de l'air, par un compresseur, seul ou associé à une turbine pour former un turbocompresseur, pour ensuite l'envoyer vers tous appareils et plus particulièrement à l'admission d'un moteur à combustion interne.

L'invention peut notamment s'avérer pertinente pour le domaine du transport (par exemple transport automobile ou poids lourd), le domaine aéronautique, la production d'électricité ou encore l'industrie alimentaire, l'industrie pétrolière, le BTP ou bien le secteur médical/paramédical.

En effet, comme cela est largement connu, la puissance délivrée par un moteur à combustion interne est dépendante de la quantité d'air introduite dans la chambre de combustion de ce moteur, quantité d'air qui est elle-même proportionnelle à la densité de cet air.

Ainsi, il est habituel d'augmenter cette quantité d'air au moyen d'une compression de l'air extérieur avant qu'il ne soit admis dans cette chambre de combustion lors d'un besoin d'une forte puissance. Cette opération, appelée suralimentation, peut être réalisée par tous moyens, tel qu'un compresseur seul entraîné électriquement par une machine électrique (compresseur électrifié), ou par un compresseur associé à une turbine et à une machine électrique pour former un turbocompresseur électrifié.

Dans les deux cas précités, la machine électrique associée au compresseur peut être de plusieurs types.

L'un de ces types est une machine électrique à faible entrefer et bobinages proches du rotor qui permet un guidage optimal du flux magnétique et un rendement optimisé. Ce type de machine électrique présente l'avantage d'une certaine compacité, qui peut parfois devenir problématique pour son refroidissement et qui demande l'utilisation d'un système spécifique pour évacuer ses pertes thermiques.

Afin de ne pas être intrusif sur l'entrée d'air du compresseur, ce type de machine électrique est classiquement positionné au dos du compresseur centrifuge dans le cas d'un compresseur électrifié, ou entre le compresseur et la turbine dans le cas d'un turbocompresseur électrifié, et cela malgré la présence d'un environnement thermique défavorable dans ce dernier cas, car proche de la turbine. Généralement, la liaison entre le compresseur, la turbine et la machine électrique est rigide. Ce type de machine peut aussi être positionné côté compresseur mais à une distance relativement éloignée de l'entrée d'air afin de ne pas perturber cette dernière.

Ce type de systèmes est mieux décrit dans les brevets US 2014/0373532, US 8,157,543, US 8,882,478, US 2010/0247342, US 6,449,950, US 7,360,361, EP 0 874 953 ou EP 0 912 821.

Les systèmes de refroidissement proposés dans ces brevets permettent un refroidissement externe du stator qui peut complexifier le système dans sa conception et son intégration.

EP 3 242 002 et DE10 2012 221298 décrivent chacun un dispositif de compression dans lequel un moyen de refroidissement du stator comprend deux moyens de circulation d'un fluide de refroidissement. Dans EP 3 242 002 un premier moyen de circulation s'étend longitudinalement au sein du stator. Dans DE10 2012 221298 un deuxième moyen de circulation est positionné sur le pourtour du stator.

Un autre type de machines est une machine électrique à fort entrefer (appelée machine à « Air Gap »), dont l'entrefer peut parfois mesurer plusieurs centimètres afin de laisser passer le fluide de travail dans cet entrefer permettant ainsi une intégration au plus proche des systèmes de compression, dans un environnement thermique nettement plus favorable.

Cependant, ce fort entrefer représente un inconvénient pour assurer le passage du flux magnétique entre le rotor et le stator et donc une limitation pour le rendement intrinsèque de la machine ainsi que pour l'encombrement du stator pour la même puissance délivrée.

Ce type de machine électrique est notamment décrit dans les brevets EP 1 995 429, US 2013/169074 ou US 2013/043745.

Un nouveau type de machine est apparu récemment. Il s'agit de la machine à grille statorique, qui est mieux décrit dans les demandes de brevets FR 3 041 831 (WO2017/050577) et FR 3 048 022. Cette machine électrique, dite « à grille statorique », comprend un rotor et un stator. Le stator comporte une multiplicité de passages radiaux disposés circonférentiellement le long du stator, des générateurs de flux magnétique logés dans ces passages radiaux, et un palier de stator recevant le rotor. Les générateurs de flux magnétiques sont par exemples des bobines. Les passages radiaux comportent des galeries de circulation de fluide en regard des générateurs de flux magnétique. De plus, les passages radiaux sont séparés par des dents radiales, appelées également « dents statoriques ».

Cette machine présente l'avantage d'offrir un meilleur compromis en termes de refroidissement et de performances électriques que les deux autres types de machines. Toutefois, dans certaines conditions de fonctionnement, le refroidissement induit par la circulation de fluide à travers les galeries de circulation peut s'avérer insuffisant, le débit de fluide étant fixé pour atteindre un objectif de performance du système global, sans corrélation avec le besoin en refroidissement intrinsèque de la machine.

Pour toutes ces machines électriques, le refroidissement du stator est un enjeu majeur pour améliorer la durée de vie de la machine électrique, augmenter sa plage de fonctionnement et améliorer son rendement. Toutefois, ce refroidissement ne doit pas, en contrepartie, impacter la puissance maximale de sortie. Le refroidissement ne doit pas non plus impacter significativement le coût ou l'encombrement du système. Les performances de la machine électrique sont par ailleurs très importantes pour les performances d'un compresseur électrifié et a fortiori dans le cas d'un turbocompresseur électrifié.

Des problèmes similaires se posent pour tous types de machines électriques.

Par ailleurs, sur des solutions de systèmes de suralimentation électrifiées, l'utilisation de machines électriques à grilles statoriques peut s'avérer limitant lorsque le débit traversant la machine électrique est élevé. Cette dernière peut créer une perte de charge élevée pouvant réduire les performances globales du système.

Pour répondre aux besoins précités, la présente invention concerne un dispositif de compression d'un fluide gazeux ou liquide équipé d'une machine électrique comprenant un rotor, un stator, une enveloppe externe et un moyen de refroidissement dudit stator, le rotor et le stator étant coaxiaux selon un axe longitudinal, le stator comprenant des bobines. Le moyen de refroidissement du stator comprend au moins deux moyens de circulation d'un fluide de refroidissement. Au moins un premier moyen de circulation s'étend longitudinalement au sein du stator et au moins un deuxième moyen de circulation est positionné sur le pourtour du stator. Ainsi, la machine électrique dispose d'un moyen de refroidissement efficace, passant au plus près et de part et d'autre des générateurs de flux magnétique, sans impacter le flux magnétique, ni les pertes fer. De plus, ce moyen de refroidissement n'induit pas de surcoût important ni de modification majeure sur l'encombrement du système. Ce moyen de refroidissement est simple et n'utilise pas de boucle fermée de fluide, qui entraînerait l'ajout de pompes et autres équipements ainsi que la consommation de fluide. Il permet enfin de limiter la perte de charge générée par la machine sur le fluide, en ne faisant pas passer l'ensemble du fluide de travail par la grille statorique.

L'invention concerne également un turbocompresseur électrifié avec ce type de machine électrique.

### Le dispositif selon l'invention

Le dispositif selon l'invention concerne un dispositif de compression d'un fluide gazeux ou liquide équipé d'une machine électrique tel que défini dans la revendication 1, ladite machine électrique comprenant un rotor, un stator, une enveloppe externe et un moyen de refroidissement dudit stator, le rotor et le stator étant coaxiaux selon un axe longitudinal, le stator comprenant des bobines. Selon l'invention ledit moyen de refroidissement dudit stator comprend au moins deux moyens de circulation d'un fluide, au moins un premier moyen de circulation s'étendant longitudinalement au sein dudit stator et au moins un deuxième moyen de circulation étant positionné sur le pourtour dudit stator.

De manière avantageuse, le stator comporte une multiplicité de passages radiaux disposés circonférentiellement le long dudit stator, lesdits passages radiaux étant délimités par des dents radiales, lesdites bobines étant logées dans lesdits passages radiaux, lesdits passages radiaux formant ledit au moins un premier passage de fluide de refroidissement en regard desdites bobines.

De préférence, le fluide de refroidissement est de l'air, préférentiellement, de l'air à température ambiante prélevé dans le milieu ambiant.

Selon un mode de réalisation de l'invention, au moins un deuxième moyen de circulation est situé entre lesdites bobines et l'enveloppe externe.

Selon une variante de l'invention, l'entrée dans au moins deuxième moyen de circulation est radiale à partir dudit au moins premier moyen de circulation.

Alternativement, l'entrée dudit au moins deuxième moyen de circulation est axiale.

Selon un mode de réalisation de l'invention, la sortie dudit deuxième moyen de circulation est radiale.

Alternativement, la sortie dudit deuxième moyen de circulation est axiale.

De manière avantageuse, le deuxième moyen de circulation comporte, en sa sortie, un moyen d'orientation sensiblement radiale du flux de fluide de refroidissement pour le mélange desdits fluides de refroidissement circulant dans lesdits au moins deux moyens de circulation.

Selon l'invention ledit au moins deuxième moyen de circulation comprend un moyen de régulation de débit passif, positionné à l'entrée ou à la sortie dudit au moins deuxième moyen de circulation.

Préférentiellement, ledit au moins deuxième moyen de circulation comprend des ailettes au niveau dudit au moins deuxième moyen de circulation, de préférence, des ailettes s'étendant d'une extrémité à l'autre de la section, orthogonale à la direction du flux de fluide, de refroidissement dudit au moins deuxième moyen de circulation.

En outre, l'invention concerne aussi un dispositif de turbocompresseur électrifié comprenant un moyen de détente et un dispositif de compression, selon la caractéristique précédente, ledit moyen de détente et ledit dispositif de compression étant fixés sur un même arbre de rotation, permettant une mise en rotation commune dudit moyen de détente et dudit dispositif de compression.

### Présentation succincte des figures

D'autres caractéristiques et avantages du système selon l'invention, apparaîtront à la lecture de la description ci-après d'exemples non limitatifs de réalisations, en se référant aux figures annexées et décrites ci-après.
La figure 1 illustre un premier mode de réalisation d'une machine électrique utile pour mettre en évidence des aspects spécifiques d'une machine électrique selon l'invention.
La figure 2 illustre un deuxième mode de réalisation d'une machine électrique selon l'invention.
La figure 3 illustre un troisième mode de réalisation d'une machine électrique selon l'invention.
La figure 4 illustre un quatrième mode de réalisation d'une machine électrique selon l'invention.
La figure 5 illustre un cinquième mode de réalisation d'une machine électrique selon l'invention.
La figure 6 illustre un schéma d'un dispositif de compression électrifié selon l'invention.
La figure 7 illustre un schéma d'un dispositif de turbocompresseur électrifié selon l'invention.

### Description détaillée de l'invention

L'invention concerne un dispositif de compression d'un fluide gazeux ou liquide équipé d'une machine électrique comprenant un rotor, un stator, une enveloppe externe et un moyen de refroidissement du stator. Le rotor et le stator servent à la génération d'un courant électrique (mode « générateur » de la machine électrique) ou à entraîner le rotor en rotation à partir d'un courant électrique (mode « moteur » de la machine électrique). L'enveloppe externe, également appelée « carter », sert à protéger les équipements internes de la machine, parmi lesquels le rotor et le stator, des agressions extérieures (projection d'eau par exemple) et sert également à protéger l'utilisateur des risques électriques et des risques dits de « machine tournante » représentés par la machine électrique. Le rotor et le stator sont coaxiaux, selon un axe longitudinal, de manière à permettre la rotation du rotor dans le stator. Le stator comprend des générateurs de flux magnétique, par exemple des bobines. Lorsque la machine électrique fonctionne en mode « moteur », les générateurs de flux magnétique créent un flux magnétique, entraînant le rotor, équipé de récepteurs magnétiques tels que des aimants permanents, en rotation. Lorsqu'elle est en mode « générateur », la rotation du rotor, et donc de ses aimants permanents, génère un courant électrique induit dans les générateurs de flux magnétique (qui fonctionne ainsi en récepteur).

Le moyen de refroidissement sert quant à lui à refroidir la machine afin de lui permettre de fonctionner sur des plages de température optimales pour son fonctionnement. Ainsi, la durée de vie de la machine électrique et son rendement sont augmentés. Les performances de la machine électrique sont améliorées.

Le moyen de refroidissement comprend au moins deux moyens de circulation d'un fluide.

Au moins un premier moyen de circulation s'étend longitudinalement dans le stator (au sein du stator). De cette manière, le fluide traverse totalement le stator dans le sens longitudinal, permettant de capter une grande partie des pertes thermiques du stator de la machine électrique, le cas échéant grâce à la grille statorique.

Au moins un deuxième moyen de circulation est positionné sur le pourtour du stator. Lorsque le rotor est positionné dans le stator, au moins un deuxième moyen de circulation est alors positionné à l'extérieur du stator, entre le stator et l'enveloppe externe. Ce deuxième flux de circulation du fluide passe au plus près des générateurs de flux magnétiques, ce qui permet d'améliorer leur refroidissement et donc d'augmenter les performances et le rendement de la machine électrique. Si possible, seulement une paroi sépare le deuxième flux de circulation de fluide des générateurs de flux magnétique, la paroi servant à éviter tout contact direct entre le fluide et les générateurs de flux magnétiques.

Les au moins deux moyens de circulation sont en circuits ouverts. Ainsi, aucune pompe, tuyauteries et équipements annexes utiles à la circulation en boucle fermée n'est nécessaire. Lorsque les au moins deux moyens de circulation du fluide sont séparés uniquement par les générateurs de flux magnétique, c'est-à-dire lorsque les moyens de circulation du fluide sont situés de part et d'autre des générateurs de flux magnétique, en passant le plus près possible des générateurs de flux magnétique, l'efficacité du moyen de refroidissement est améliorée.

Cette configuration de moyen de refroidissement avec au moins deux moyens de circulation de fluide est particulièrement intéressante. Elle permet d'augmenter la section de passage du fluide, par rapport à une configuration où seule l'un ou l'autre des moyens de circulation serait utilisé, sans augmenter l'entrefer. En augmentant la section de passage, le débit de fluide peut donc être augmenté, sans induire de pertes de charge supplémentaires. Au contraire, dans la configuration où un seul des deux moyens de circulation de fluide est utilisé, l'augmentation de la section de passage de fluide serait plus importante et nécessiterait une augmentation plus importante de l'encombrement général de la machine. Il en résulte que le débit de fluide traversant la machine serait alors limité à cause des pertes de charges.

L'augmentation du débit de fluide dans la machine électrique permet d'améliorer son refroidissement intrinsèque. De plus, en séparant la circulation de fluide en au moins deux parties, l'une à l'intérieur du stator, et au moins une autre partie sur son pourtour extérieur, et plus particulièrement si le flux de circulation passe de part et d'autre des générateurs de flux magnétique, l'efficacité du refroidissement est améliorée. On peut alors, pour un même encombrement de machine, augmenter sa puissance ou bien pour une machine de même puissance, la rendre plus compacte. De plus, la réduction de la température des générateurs de flux permet de réduire leur résistance et donc les pertes joules, permettant ainsi d'améliorer encore le rendement.

Ce moyen de refroidissement est particulièrement pertinent lorsqu'un moyen de compression (un compresseur par exemple) est utilisé en aval de la machine électrique. En effet, augmenter le débit arrivant à l'entrée du moyen de compression, sans impacter les pertes de charges dans la machine électrique, permet d'améliorer les performances du moyen de compression. Un dispositif de compression électrifié par une telle machine, et a fortiori un dispositif de turbocompresseur électrifié, représentent donc un gain important de performances par synergie entre les gains obtenus sur la machine électrique et ceux obtenus sur le moyen de compression.

Ici, la présente invention concerne tous types de machine électrique, y compris les machines à grille statorique et les machines à large « AirGap ».

Selon un mode de réalisation de la machine électrique selon l'invention, le stator peut comporter une multiplicité de passages radiaux disposés circonférentiellement le long du stator, cylindrique ou sensiblement cylindrique. Les passages radiaux peuvent être délimités par des dents radiales et les générateurs de flux magnétique peuvent être logés dans les passages radiaux, ces passages radiaux formant ainsi au moins un premier passage de fluide en regard desdits générateurs de flux magnétique (bobines par exemple). Dans ce cas, la machine électrique est une machine électrique à grille statorique.

Le moyen de refroidissement comprenant au moins deux moyens de circulation, tels que définis précédemment, est particulièrement adapté à une machine électrique à grille statorique. En effet, la machine électrique à grille statorique est conçue pour permettre un flux de fluide important au sein du stator. Au moins un deuxième moyen de circulation, situé sur le pourtour du stator, de préférence entre les générateurs de flux magnétique et l'enveloppe externe, permet d'améliorer encore le refroidissement, par exemple, lors de fonctionnement induisant un fort courant dans les générateurs de flux magnétique et donc des pertes joules importantes. Ce refroidissement supplémentaire permet aussi d'améliorer la durée de vie de la machine électrique et également d'améliorer le rendement de la machine électrique en réduisant la température et donc la résistance de ces générateurs de flux.

Par ailleurs, le débit étant déjà important dans le stator par la configuration même de la machine à grille statorique, la section de passage du deuxième moyen de circulation peut être réduite, limitant ainsi les contraintes d'encombrement. Avec ce deuxième moyen de circulation, il est possible de réduire la section de passage à l'intérieur du stator, limitant les contraintes d'encombrement et la quantité de matériaux utilisée dans le stator, ce qui implique une réduction du coût du système mais aussi une réduction des pertes fer car la machine électrique comporte moins de matériaux ferrique.

De préférence, le fluide peut être de l'air, de préférence de l'air prélevé dans le milieu ambiant. Ainsi, il n'y a pas besoin de consommer du fluide dédié ce qui d'une part, réduit le coût du moyen de refroidissement et d'autre part, évite l'utilisation de pompes, réservoirs, tuyauteries et autres équipements annexes, qui induirait un coût et des risques de pannes.

Selon une variante de l'invention, au moins un deuxième moyen de circulation peut être situé entre les générateurs de flux magnétique et l'enveloppe externe. Ainsi, la circulation de fluide passe au plus près des générateurs de flux magnétique, permettant un refroidissement amélioré.

De préférence, au moins un deuxième moyen de circulation peut être constitué par un espace annulaire, par exemple entre le diamètre externe des générateurs de flux magnétique et le diamètre interne de l'enveloppe externe.

Cet au moins deuxième moyen de circulation peut aussi être constitué par un ensemble d'espaces longitudinaux de section circulaire, sous la forme de tubes rapportés ou de perçages dans une masse métallique, ces espaces étant préférentiellement équitablement répartis autour des générateurs de flux magnétique afin d'évacuer l'énergie thermique le plus homogènement possible.

Selon un mode de réalisation de la machine selon l'invention, le stator, le rotor et l'enveloppe externe peuvent être de forme cylindrique, sensiblement cylindrique ou annulaire. L'entrée dans le deuxième moyen de circulation peut être radiale à partir du premier moyen de circulation. Dans ce cas, le flux arrivant dans la machine est partiellement dévié. Une partie du flux continue longitudinalement pour traverser le stator et la partie déviée rentre radialement dans au moins un deuxième moyen de circulation, la répartition du débit étant réalisée de manière passive via la différence de pression amont/aval de la machine électrique. Cette configuration permet de simplifier la conception de la machine avec une seule entrée d'air au lieu de deux entrées séparées.

Alternativement, l'entrée dans au moins un deuxième moyen de circulation peut être axiale. Dans ce cas, la machine électrique dispose de deux entrées d'air séparées. Ces deux entrées d'air peuvent être ou non issues d'une même veine fluide en amont de la machine électrique. L'entrée axiale est intéressante car elle permet de réduire les pertes de charge par rapport à une entrée radiale.

Selon une variante du système selon l'invention, la sortie d'au moins un deuxième moyen de circulation peut être radiale. De cette manière, la jonction des flux sortant d'au moins un premier moyen de circulation et sortant d'au moins un deuxième moyen de circulation peut se faire avant la sortie du fluide de la machine électrique, homogénéisant ainsi le flux de sortie.

Alternativement, la sortie d'au moins un deuxième moyen de circulation peut être axiale. Dans ce cas, la machine électrique dispose de deux sorties d'air séparées. Ces deux sorties d'air peuvent ou non se rejoindre dans une même veine de fluide, en aval de la machine électrique. La sortie axiale est intéressante pour réduire les pertes de charge.

De manière avantageuse, au moins un deuxième moyen de circulation peut comporter, en sa sortie, un moyen d'orientation sensiblement radiale du flux de fluide pour le mélange des fluides circulant dans au moins deux moyens de circulation. Ce moyen d'orientation sensiblement radiale a pour fonction d'orienter le flux de circulation de fluide pour lui donner un mouvement de rotation, dite « pré-rotation », autour de l'axe longitudinal de la machine électrique. Cette fonction est particulièrement intéressante lorsqu'un compresseur est utilisé en aval, dans le sens de circulation du fluide, de la machine électrique. En effet, le mouvement de pré-rotation du fluide permet modifier le champ du compresseur, en augmentant sa zone d'utilisation, notamment vers les faibles débits et forts rapports de compression (le rapport de compression étant le rapport entre la pression de sortie du compresseur et la pression d'entrée du compresseur). Ce moyen d'orientation sensiblement radiale peut, par exemple, être constitué par des aubes ou par des pièces ressemblant sensiblement ou partiellement à des aubes. Il peut aussi être constitué de pièces circulaires : par exemple une pièce circulaire en rotation et une autre pièce circulaire fixe, l'une des deux au moins étant perforée, de manière à ce qu'au cours de la rotation, l'ouverture s'ouvre plus ou moins, en étant alternativement complètement ouverte, partiellement fermée, puis totalement fermée, partiellement ouverte, complètement ouverte etc...

Selon l'invention, au moins un deuxième moyen de circulation peut comprendre un moyen de régulation de débit passif, positionné à l'entrée ou à la sortie d'au moins un deuxième moyen de circulation. Ce moyen de régulation permet ou non la circulation dans le deuxième moyen de circulation. Cela permet d'améliorer le fonctionnement de la machine, en évitant le passage lorsque cela n'est pas pertinent. Lorsque cela est utile, notamment en cas de forts débits ou pour modifier l'orientation du flux en aval de la machine électrique, soit un contrôle du moyen de régulation de débit permet une ouverture adaptée (moyen de régulation de débit actif), soit la perte de charge générée dans ce moyen de régulation de débit entraîne le passage d'une partie du fluide dans le deuxième moyen de circulation (moyen de régulation de débit passif). Le moyen de régulation de débit passif présente l'avantage d'avoir un coût faible et ne nécessite pas de contrôle. Le moyen de régulation de débit passif peut par exemple être constitué par une ou plusieurs ouvertures calibrées, par exemple des trous calibrés. Il peut aussi être constitué par une orientation pertinente au niveau de l'entrée dans le deuxième moyen de circulation, orientation générant une perte de charge adéquate, contraignant le flux à passer dans le premier moyen de circulation jusqu'à un certain débit.

Préférentiellement, au moins un deuxième moyen de circulation peut comprendre des ailettes au niveau du deuxième moyen de circulation. Les ailettes permettent d'augmenter la surface d'échange de chaleur et ainsi améliorer le refroidissement de la machine.

De préférence, des ailettes peuvent s'étendre d'une extrémité à l'autre de la section, orthogonale à la direction du flux de fluide, du deuxième moyen de circulation. Par exemple, lorsque le stator et l'enveloppe externe sont cylindriques, les ailettes peuvent s'étendre du diamètre externe du stator jusqu'au diamètre interne de l'enveloppe externe. Ainsi, la surface d'échange de chaleur est améliorée.

Comme mentionné précédemment, l'invention concerne un dispositif de compression d'un fluide gazeux ou liquide comprenant un moyen de compression avec une admission du fluide à comprimer, une sortie du fluide comprimé. Le moyen de compression du fluide est porté par un arbre de compresseur et logé entre l'admission et la sortie. Le dispositif comprend une machine électrique selon au moins l'une des caractéristiques décrites précédemment. La machine électrique étant positionnée en amont, selon le sens du flux de fluide, du moyen de compression. L'utilisation d'une machine électrique telle que décrite au-dessus permet d'améliorer les performances du compresseur électrique, par les performances améliorées de la machine électrique, par l'augmentation de débit en entrée de compresseur, et par la modification du champ de fonctionnement du compresseur pour accroître sa zone d'utilisation, notamment vers les faibles débits et forts rapports de compression, grâce à l'utilisation par exemple de la pré-rotation. La pré-rotation, en sens inverse, permet également d'étendre le fonctionnement du compresseur vers les hauts débits.

L'invention concerne aussi un dispositif de turbocompresseur électrifié comprenant un moyen de détente et un dispositif de compression, tel que décrit précédemment. Le moyen de détente et le dispositif de compression sont alors fixés sur un même arbre de rotation, permettant une mise en rotation commune du moyen de détente et du dispositif de compression. Les améliorations du compresseur électrifié avec l'une des caractéristiques précédentes permettent d'améliorer les performances du turbocompresseur électrifié.

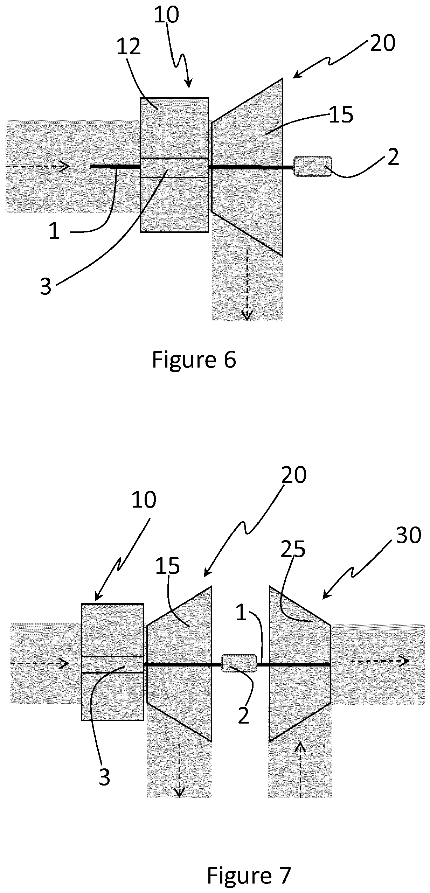

La figure 6 présente, de manière schématique et non limitative, un exemple de dispositif de compression électrifié, sous la forme d'un compresseur électrifié 20 selon l'invention. Le système comprend un arbre de rotation 1, une machine électrique 10 et un moyen de compression 15 (par exemple un compresseur). Un fluide traverse le système dans le sens des flèches en pointillé. La machine électrique 10 est placée en amont du moyen de compression 15 dans le sens du flux de circulation de fluide, de manière à être dans un conditionnement thermique plus favorable à son refroidissement. Un système de guidage 2 sert à reprendre les efforts, notamment la masse de l'ensemble, et sert également à la mise en place de roulements. De préférence, le moyen de compression 15 est placé en aval de la machine électrique 10, juste derrière la machine électrique 10. En étant ainsi au plus près de la machine électrique 10, le moyen de compression 15 profite d'un fort débit d'air traversant la machine électrique.

La machine électrique comporte un rotor 3 et un stator 12. Le stator 12 est fixe. Le rotor 3 et le moyen de compression 15 tournent par une action commune induite par l'arbre de rotation 1. Le champ magnétique induit dans la machine électrique 10 peut générer la rotation du rotor 3, entraînant l'arbre de rotation 1, lui-même entraînant le moyen de compression 15. Dans certaines conditions, lors de décélération du moyen de compression, le fonctionnement peut être inversé : la rotation du moyen de compression 15, entraîne l'arbre de rotation 1 qui entraîne lui-même la rotation du rotor 3, générant ainsi de l'électricité au sein de la machine électrique 10.

La figure 7 présente, de manière schématique et non limitative, un exemple de dispositif de turbocompresseur électrifié 30, comprenant un compresseur électrifié 20 et un moyen de détente (ici une turbine) 25. Le compresseur électrifié 20 est identique à celui de la figure 6. Dans le turbocompresseur électrifié 30, l'arbre de rotation 1, qui permet la rotation commune de la machine électrique 10 et du moyen de compression 15, est prolongé de l'autre côté du système de guidage 2 et permet également la rotation du moyen de détente 25. Le moyen de détente 25, est positionné sur le côté opposé au compresseur électrifié par rapport au système de guidage 2. D'autres montages sont néanmoins possibles, sans que cela puisse limiter l'invention.

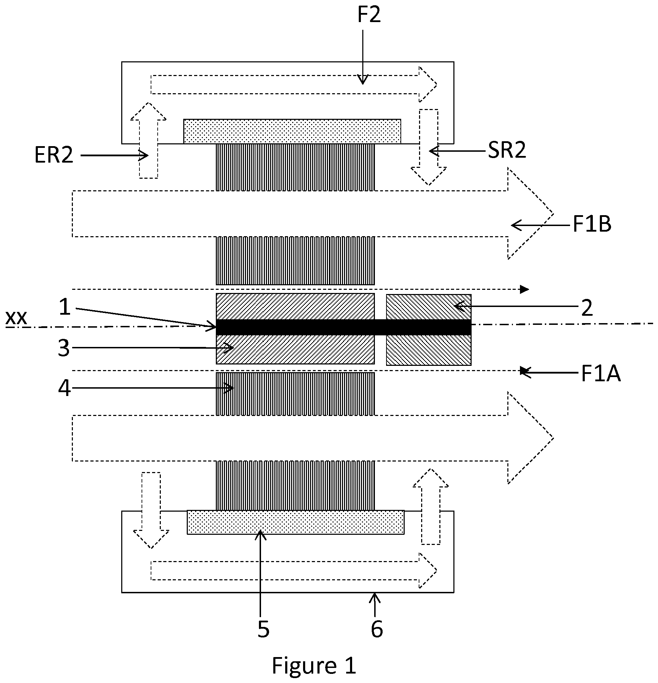

Les figures 1 à 5, illustrent plusieurs modes de réalisation de machines électriques de type machine électrique à grille statorique, mais l'invention peut être utilisée pour d'autres types de machine électrique, de manière non limitative.

De plus, pour les figures 1 à 5, le rotor 3, l'arbre 1, le système de guidage 2, la grille statorique 4, l'enveloppe externe 6 et les générateurs de flux magnétique 5 forment des pièces cylindriques ou annulaires ou sensiblement cylindriques ou annulaires. Sur ces figures, les flèches en pointillé indiquent la circulation de fluide, à travers la machine, les circulations se faisant en boucle ouvertes.

La figure 1 présente, de manière schématique et non limitative un premier mode de réalisation utile pour mettre en évidence des aspects spécifiques de la machine électrique selon l'invention.

La machine électrique de la Figure 1 comprend un arbre de rotation 1, un système de guidage 2, pouvant regrouper, de manière non limitative, paliers, roulements pour le guidage et la liaison avec les équipements annexes, un rotor 3, une grille statorique 4, des générateurs de flux magnétique 5 et une enveloppe externe 6. Des générateurs de flux magnétique 5, par exemple des bobines, sont positionnés dans la grille statorique 4, dans la partie périphérique externe de la grille statorique 4, le diamètre externe des générateurs de flux magnétique 4, et celui de la grille statorique 5 étant sensiblement confondus. La grille statorique 4 et les générateurs de flux magnétique 5 forment le stator de la machine électrique. Comme mieux décrit dans les demandes de brevets FR 3 041 831 (WO2017/050577) et FR 3 048 022, la grille statorique 4 comporte des voiles radiaux formant des galeries de circulation. Un fluide peut donc circuler dans ces galeries de circulation, qui forment ainsi au moins un premier moyen de circulation, le fluide pouvant ainsi refroidir les générateurs de flux magnétique 5, sur leur diamètre interne, et la grille statorique 4. La surface d'échange thermique importante générée par les voiles radiaux permet d'obtenir un refroidissement très efficace de la machine électrique.

L'axe xx est l'axe longitudinal autour duquel tourne le rotor 3 et l'arbre de rotation 1, le rotor 3 étant monté fixe sur l'arbre de rotation 1 permettant une rotation commune de l'arbre de rotation 1 et du rotor 3. Le stator, composé de la grille statorique 4 et des générateurs de flux magnétique 5, entoure le rotor et il est fixe. Un entrefer est disposé entre le rotor et le stator.

Un système de guidage 2 sert à la reprise des efforts, notamment de masse de la machine électrique, et à la mise en place, par exemple et de manière non limitative, de roulements permettant la liaison entre l'arbre de rotation 1 à un bâti fixe (non représenté).

Dans cette machine électrique, circule un fluide. Ce fluide est par exemple de l'air, de préférence prélevé dans le milieu ambiant. La circulation du fluide est en circuit ouvert.

Sur la figure 1, le fluide arrivant dans la machine est scindé en plusieurs flux. Une première partie d'un premier flux F1B passe directement dans les galeries de circulation de la grille statorique 4, formant ainsi au moins un premier moyen de circulation. Le premier flux F1B peut passer dans le stator d'un autre type de machine électrique. Une faible partie de ce premier flux passe dans l'entrefer (espace formé entre le rotor 3 et la grille statorique 4) : il s'agit du flux F1A.

Un deuxième flux de circulation F2 est dévié du premier flux de circulation F1A/F1B pour passer dans une entrée ER2, ici une entrée radiale, et passe ensuite par au moins un deuxième moyen de circulation. Ce deuxième moyen de circulation est une section annulaire entre les générateurs de flux magnétique 5 et l'enveloppe externe 6. De préférence, ce deuxième moyen de circulation est à proximité du diamètre extérieur des générateurs de flux magnétique 5, de manière à optimiser leur refroidissement. Cette deuxième partie du flux de circulation rejoint ensuite la première partie du flux, générée par les flux F1A, F1B et F2, en sortant par la sortie SR2, radiale. Le flux ressortant de la machine électrique est donc le flux reconstitué par les flux F1A, F1B et F2.

Il est également possible d'intégrer un moyen d'orientation du flux de circulation (non représenté) sur la sortie radiale SR2. Ce moyen d'orientation permet à la fois de mélanger les flux provenant du deuxième flux de circulation F2 et des deux parties du premier flux F1A et F1B passant à travers l'entrefer et le stator, et à la fois de leur donner une pré-rotation, autour de l'axe de rotation. Cette pré-rotation du flux est particulièrement intéressante lorsqu'un dispositif de compression, a fortiori un dispositif de turbocompresseur, est positionné derrière la machine électrique. En effet, cette pré-rotation du flux en entrée du dispositif de compression permet d'augmenter son rendement. Cette pré-rotation peut par exemple être induite par des aubes ou des morceaux d'aubes.

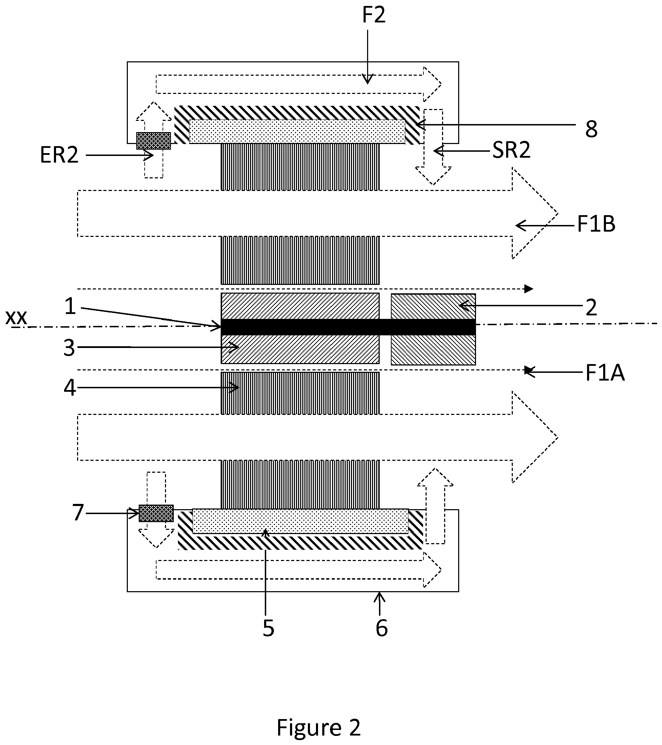

Pour les Figures 2 à 5, les références identiques à la figure 1 correspondent en tout point aux références de la Figure 1. Elles ne seront pas décrites en détail dans ces figures.

La figure 2 représente un deuxième mode de réalisation du système selon l'invention, de manière schématique et non limitative. Ce mode de réalisation diffère de la figure 1 par l'ajout d'ailettes 8 positionnées sur le diamètre extérieur des générateurs de flux magnétique 5, et d'ailettes 8 positionnées aux deux extrémités longitudinales, selon l'axe longitudinal xx, des générateurs de flux magnétique 5. Ces ailettes favorisent l'échange de chaleur entre les générateurs de flux magnétique 5 et le flux de circulation F2. Les ailettes 8 peuvent notamment être positionnées depuis le diamètre externe des générateurs de flux magnétiques 5 et s'étendre jusqu'au diamètre interne de l'enveloppe externe 6. Ainsi, la surface d'échange est maximale et le refroidissement est optimal. De manière avantageuse, il peut être intéressant de conserver un jeu, même faible, entre les ailettes 8 et l'enveloppe externe 6, de manière à éviter de conduire la chaleur provenant de l'environnement extérieur vers le stator de la machine électrique (cas du véhicule à l'arrêt au bord de l'autoroute par exemple).

Ce mode de réalisation comporte également des moyens de régulation de débit 7 positionnés au niveau des entrées radiales ER2 du deuxième flux de circulation F2 passant dans au moins un deuxième moyen de circulation. Ces moyens de régulation de débit 7 permettent ou non le passage du fluide dans les moyens de circulation pour le passage du flux F2. Ils peuvent notamment ouvrir ou fermer une section de passage en mode « tout-ou-rien » ou ouvrir une section de passage de manière régulée pour permettre ainsi une section de passage plus ou moins grande en fonction du besoin. Sans que cela soit limitatif, les moyens de régulation de débit peuvent être un simple trou calibré pour le passage dans le flux F2 dans certaines conditions de pression/débit ou une vanne « tout-ou-rien ».

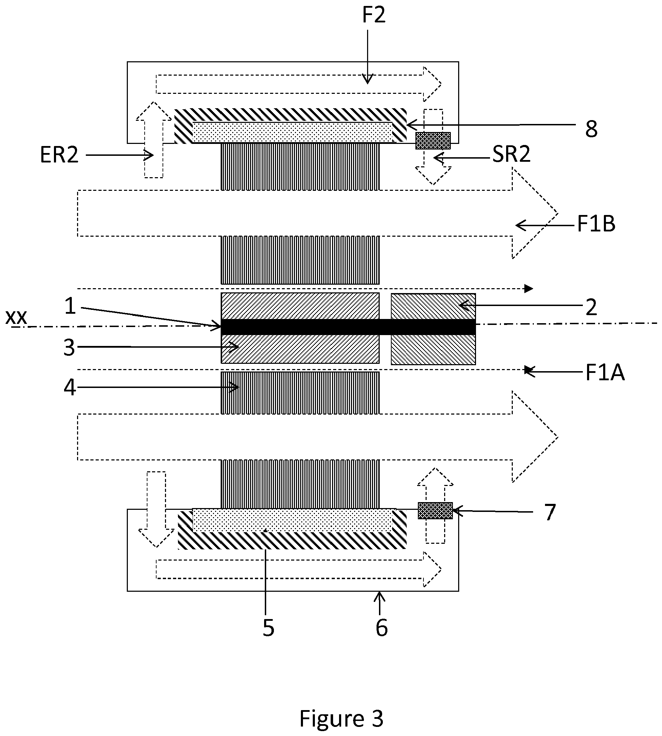

Pour les Figures 3 à 5, les références identiques à la figure 2 correspondent en tout point aux références de la Figure 2. Elles ne seront pas décrites en détail dans ces figures.

La Figure 3 représente une troisième variante de la machine électrique selon l'invention. Sur cette figure, le moyen de régulation de débit est positionné sur la sortie radiale SR2 d'au moins un deuxième flux de circulation F2. Cette configuration a la même fonction que celle de la figure 2, c'est-à-dire de laisser passer ou non un débit dans les deuxièmes moyens de circulation. En positionnant le moyen de régulation de débit en sortie d'au moins un deuxième flux, il est possible d'y intégrer également un moyen d'orientation du flux de circulation. Ce moyen d'orientation permet à la fois de mélanger les flux provenant du deuxième flux de circulation F2 et des deux parties du premier flux F1A et F1B passant à travers l'entrefer et le stator, et à la fois de leur donner une pré-rotation, autour de l'axe de rotation. Cette pré-rotation du flux est particulièrement intéressante lorsqu'un dispositif de compression tel qu'un compresseur, a fortiori un dispositif de turbocompresseur, est positionné derrière la machine électrique, créant ainsi un compresseur électrifié ou un turbocompresseur électrifié. En effet, cette pré-rotation du flux en entrée du compresseur permet d'augmenter son rendement. Cette pré-rotation peut par exemple être induite par des aubes ou des morceaux d'aubes.

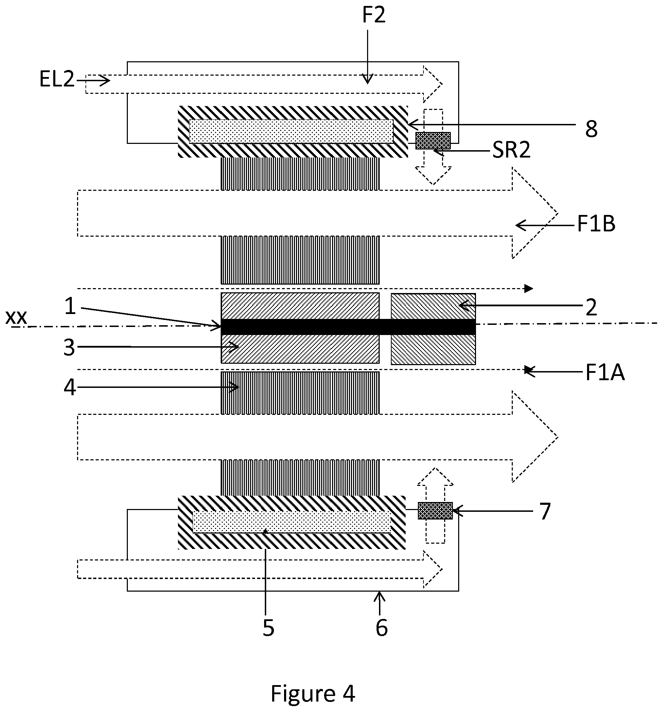

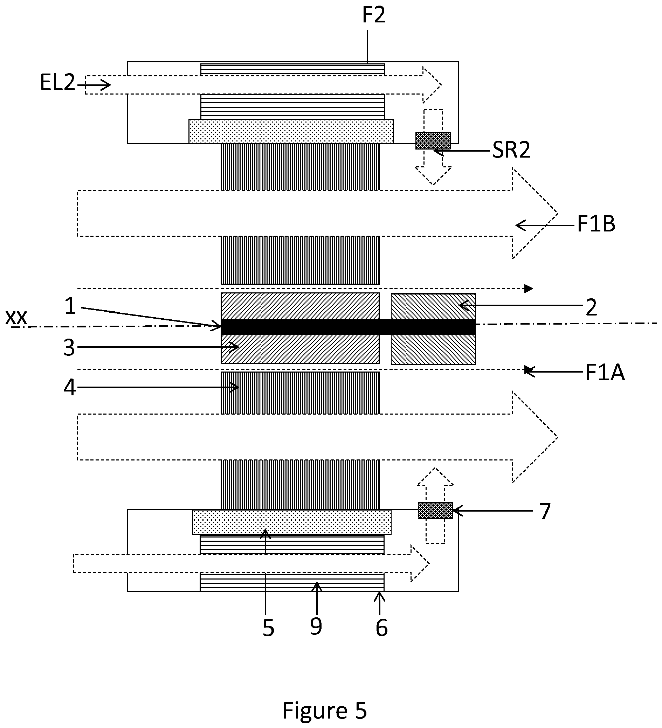

Pour les Figures 4 et 5, les références identiques à la figure 3 correspondent en tout point aux références de la Figure 3. Elles ne seront pas décrites en détail dans ces figures.

La figure 4 présente une quatrième variante de la machine électrique selon l'invention, de manière schématique et non limitative. Cette figure diffère des figures 1 à 3 précédentes par le fait que l'entrée du fluide dans le deuxième moyen de circulation ne se fait plus radialement mais axialement. Ainsi, la machine électrique ne dispose plus d'une seule entrée fluide mais de deux entrées fluide. Toutefois, ces deux entrées peuvent être issues d'une même veine fluide en amont de la machine électrique. Il peut s'agir par exemple d'une même tuyauterie dont le diamètre engloberait les deux entrées axiales de la machine électrique. L'entrée du flux EL2 est donc axiale, parallèle à l'axe de rotation xx. L'entrée axiale EL2 permet de réduire les pertes de charges par rapport à une entrée radiale.

La sortie du flux F2 reste radiale et dispose d'un moyen de régulation de débit 7 sur la sortie SR2 radiale, ce moyen de régulation de débit pouvant ou non comprendre un moyen d'orientation du flux en sortie pour induire ou non une pré-rotation du flux.

Sur la figure 4, les ailettes 8 sont disposées tout autour des générateurs de flux magnétiques 5. En effet, elles sont disposées à la fois sur le diamètre extérieur et aux deux extrémités longitudinales des générateurs de flux magnétique 5, comme sur les figures 2 et 3, à la fois sur le diamètre intérieur des générateurs de flux magnétique 5. En entourant totalement les générateurs de flux magnétique 5, les ailettes 8 permettent un meilleur refroidissement en augmentant la surface d'échange.

La figure 5 montre encore une cinquième variante de la machine électrique selon l'invention, de manière schématique et non limitative. Cette figure diffère de la figure 4 par le fait que les ailettes 8 de la figure 4 sont remplacées par un système de refroidissement secondaire 9. Ce système de refroidissement secondaire 9 peut par exemple consister en un circuit fermé de refroidissement d'un fluide, de préférence liquide.

## Revendications

1. Dispositif de compression (20) d'un fluide gazeux ou liquide comprenant un moyen de compression (15) avec une admission dudit fluide à comprimer, une sortie dudit fluide comprimé, ledit moyen de compression (15) dudit fluide étant porté par un arbre de compresseur (1) et logé entre ladite admission et ladite sortie, et une machine électrique, ladite machine électrique (10) étant positionnée en amont, selon le sens du flux de fluide, dudit moyen de compression (15), la machine électrique (10) comprenant un rotor (3), un stator (12), une enveloppe externe (6) et un moyen de refroidissement dudit stator, le rotor (3) et le stator (12) étant coaxiaux selon un axe longitudinal (xx), le stator (12) comprenant des bobines, **caractérisée en ce que** ledit moyen de refroidissement dudit stator (12) comprend au moins deux moyens de circulation d'un fluide de refroidissement, au moins un premier moyen de circulation s'étendant longitudinalement au sein dudit stator (12) et au moins un deuxième moyen de circulation étant positionné sur le pourtour dudit stator (12), ledit au moins deuxième moyen de circulation comprenant un moyen de régulation de débit (7) passif positionné à l'entrée (ER2, EL2) ou à la sortie (SR2) dudit au moins deuxième moyen de circulation.

2. Dispositif de compression (20) selon la revendication 1, pour laquelle le stator (12) comporte une multiplicité de passages radiaux disposés circonférentiellement le long dudit stator (12), lesdits passages radiaux étant délimités par des dents radiales, lesdites bobines étant logés dans lesdits passages radiaux, lesdits passages radiaux formant ledit au moins un premier passage de fluide de refroidissement en regard desdites bobines.

3. Dispositif de compression (20) selon l'une des revendications précédentes, pour laquelle le fluide de refroidissement est de l'air, de préférence de l'air à température ambiante prélevé dans le milieu ambiant.

4. Dispositif de compression (20) selon l'une des revendications précédentes, pour laquelle au moins un deuxième moyen de circulation est situé entre lesdites bobines et l'enveloppe externe (6).

5. Dispositif de compression (20) selon l'une des revendications précédentes, pour laquelle l'entrée dans au moins deuxième moyen de circulation est radiale à partir dudit au moins premier moyen de circulation.

6. Dispositif de compression (20) selon l'une des revendications 1 à 4, pour laquelle l'entrée dudit au moins deuxième moyen de circulation est axiale.

7. Dispositif de compression (20) selon l'une des revendications précédentes, pour laquelle la sortie dudit deuxième moyen de circulation est radiale.

8. Dispositif de compression (20) selon l'une des revendications 1 à 6, pour laquelle la sortie dudit deuxième moyen de circulation est axiale.

9. Dispositif de compression (20) selon la revendication 7, pour laquelle le deuxième moyen de circulation comporte, en sa sortie, un moyen d'orientation sensiblement radiale du flux de fluide de refroidissement pour le mélange desdits fluides de refroidissement circulant dans lesdits au moins deux moyens de circulation.

10. Dispositif de compression (20) selon l'une des revendications précédentes, pour laquelle ledit au moins deuxième moyen de circulation comprend des ailettes (8) au niveau dudit au moins deuxième moyen de circulation, de préférence, des ailettes s'étendant d'une extrémité à l'autre de la section, orthogonale à la direction du flux de fluide de refroidissement, dudit au moins deuxième moyen de circulation.

11. Dispositif de turbocompresseur électrifié (30) comprenant un moyen de détente (25) et un dispositif de compression (20), selon l'une des revendications précédentes, ledit moyen de détente (25) et ledit dispositif de compression (20) étant fixés sur un même arbre de rotation (1), permettant une mise en rotation commune dudit moyen de détente (25) et dudit dispositif de compression (20).

## Patentansprüche

1. Kompressionsvorrichtung (20) für ein gasförmiges oder flüssiges Fluid, beinhaltend ein Kompressionsmittel (15) mit einem Einlass für das zu komprimierende Fluid, einem Ausgang für das komprimierte Fluid, wobei das Kompressionsmittel (15) für das Fluid von einer Kompressorwelle (1) getragen wird und zwischen dem Einlass und dem Ausgang aufgenommen ist, und eine elektrische Maschine, wobei die elektrische Maschine (10) gemäß der Richtung der Fluidströmung stromaufwärts des Kompressionsmittels (15) positioniert ist, wobei die elektrische Maschine (10) einen Rotor (3), einen Stator (12), eine Außenhülle (6) und ein Mittel zum Kühlen des Stators beinhaltet, wobei der Rotor (3) und der Stator (12) gemäß einer Längsachse (xx) koaxial sind, wobei der Stator (12) Spulen beinhaltet, **dadurch gekennzeichnet, dass** das Mittel zum Kühlen des Stators (12) mindestens zwei Zirkulationsmittel für ein Kühlfluid beinhaltet, wobei sich mindestens ein erstes Zirkulationsmittel längs innerhalb des Stators (12) erstreckt und mindestens ein zweites Zirkulationsmittel über den Umfang des Stators (12) positioniert ist, wobei das mindestens zweite Zirkulationsmittel ein passives Durchflussregelungsmittel (7) beinhaltet, das an dem Eingang (ER2, EL2) oder an dem Ausgang (SR2) des mindestens zweiten Zirkulationsmittels positioniert ist.

2. Kompressionsvorrichtung (20) nach Anspruch 1, wobei der Stator (12) eine Vielzahl von radialen Durchgängen umfasst, die in Umfangsrichtung entlang des Stators (12) angeordnet sind, wobei die radialen Durchgänge durch radiale Zähne begrenzt werden, wobei die Spulen in den radialen Durchgängen aufgenommen sind, wobei die radialen Durchgänge den mindestens einen ersten Kühlfluiddurchgang gegenüber den Spulen bilden.

3. Kompressionsvorrichtung (20) nach einem der vorhergehenden Ansprüche, wobei das Kühlfluid Luft, vorzugsweise Luft bei Umgebungstemperatur, die der Umgebung entnommen wird, ist.

4. Kompressionsvorrichtung (20) nach einem der vorhergehenden Ansprüche, wobei sich mindestens ein zweites Zirkulationsmittel zwischen den Spulen und der Außenhülle (6) befindet.

5. Kompressionsvorrichtung (20) nach einem der vorhergehenden Ansprüche, wobei der Eingang in mindestens ein zweites Zirkulationsmittel ausgehend von dem mindestens ersten Zirkulationsmittel radial ist.

6. Kompressionsvorrichtung (20) nach einem der Ansprüche 1 bis 4, wobei der Eingang des mindestens zweiten Zirkulationsmittels axial ist.

7. Kompressionsvorrichtung (20) nach einem der vorhergehenden Ansprüche, wobei der Ausgang des zweiten Zirkulationsmittels radial ist.

8. Kompressionsvorrichtung (20) nach einem der Ansprüche 1 bis 6, wobei der Ausgang des zweiten Zirkulationsmittels axial ist.

9. Kompressionsvorrichtung (20) nach Anspruch 7, wobei das zweite Zirkulationsmittel an seinem Ausgang ein Mittel zur im Wesentlichen radialen Orientierung der Kühlfluidströmung umfasst, um die Kühlfluide, die in den mindestens zwei Zirkulationsmitteln fließen, zu mischen.

10. Kompressionsvorrichtung (20) nach einem der vorhergehenden Ansprüche, wobei das mindestens zweite Zirkulationsmittel im Bereich des mindestens zweiten Zirkulationsmittels Flügel (8), vorzugsweise Flügel, die sich von einem Ende zum anderen des Querschnitts, der orthogonal zu der Richtung der Kühlfluidströmung ist, des mindestens zweiten Zirkulationsmittels erstrecken, beinhaltet.

11. Vorrichtung eines elektrischen Turboladers (30), beinhaltend ein Entspannungsmittel (25) und eine Kompressionsvorrichtung (20) nach einem der vorhergehenden Ansprüche, wobei das Entspannungsmittel (25) und die Kompressionsvorrichtung (20) auf einer gleichen Drehwelle (1) befestigt sind, die es gestattet, das Entspannungsmittel (25) und die Kompressionsvorrichtung (20) gemeinsam in Drehung zu versetzen.

## Claims

1. Compression device (20) for compressing a gaseous or liquid fluid, comprising a compression means (15) with an intake for said fluid to be compressed, an outlet for said compressed fluid, said means (15) for compressing said fluid being borne by a compressor shaft (1) and housed between said intake and said outlet, and an electric machine, said electric machine (10) being positioned upstream, in the direction of the fluid flow, of said compression means (15), the electric machine (10) comprising a rotor (3), a stator (12), an outer shell (6) and a means for cooling said stator, the rotor (3) and the stator (12) being coaxial along a longitudinal axis (xx), the stator (12) comprising coils, **characterized in that** said means for cooling said stator (12) comprises at least two circulation means for circulating a cooling fluid, at least one first circulation means extending longitudinally within said stator (12) and at least one second circulation means being positioned on the periphery of said stator (12), said at least one second circulation means comprising a passive flow-regulating means (7) positioned at the inlet (ER2, EL2) or at the outlet (SR2) of said at least one second circulation means.

2. Compression device (20) according to Claim 1, for which the stator (12) comprises a multiplicity of radial passages arranged circumferentially along said stator (12), said radial passages being delimited by radial teeth, said coils being housed in said radial passages, said radial passages forming said at least one first cooling fluid passage facing said coils.

3. Compression device (20) according to either of the preceding claims, for which the cooling fluid is air, preferably air at ambient temperature taken from the ambient environment.

4. Compression device (20) according to one of the preceding claims, for which at least one second circulation means is situated between said coils and the outer shell (6).

5. Compression device (20) according to one of the preceding claims, for which the inlet in at least one second circulation means is radial from said at least one first circulation means.

6. Compression device (20) according to one of Claims 1 to 4, for which the inlet of said at least one second circulation means is axial.

7. Compression device (20) according to one of the preceding claims, for which the outlet of said second circulation means is radial.

8. Compression device (20) according to one of Claims 1 to 6, for which the outlet of said second circulation means is axial.

9. Compression device (20) according to Claim 7, for which the second circulation means comprises, at its outlet, a substantially radial orientation means for the flow of cooling fluid for mixing said cooling fluids circulating in said at least two circulation means.

10. Compression device (20) according to one of the preceding claims, for which said at least one second circulation means comprises fins (8) at said at least one second circulation means, preferably fins extending from one end to the other of the section, which is orthogonal to the direction of the cooling fluid flow, of said at least one second circulation means.

11. Electrified turbocompressor device (30), comprising an expansion means (25) and a compression device (20) according to one of the preceding claims, said expansion means (25) and said compression device (20) being fastened to one and the same rotation shaft (1), allowing common rotation of said expansion means (25) and said compression device (20).
